# EUROPEAN PATENT APPLICATION

(11) **EP 2 811 547 A1**
(43) Date of publication of application: **10.12.2014**
(21) Application number: 13744035.0
(22) Date of filing: 30.01.2013
(51) Int. Cl.: H01M 2/30, B32B 15/08, H01M 2/02, H01M 2/06

(54) **ELECTRODE TERMINAL FOR SECONDARY BATTERIES**

(30) Priority: 31.01.2012 JP 2012018960
(71) Applicant: Toppan Printing Co., Ltd., Tokyo 110-8560 (JP)
(72) Inventor: TAKADA Takehisa, Tokyo 110-8560 (JP)
(74) Representative: TBK
(86) International application number: PCT/JP2013/052011
(87) International publication number: WO 2013/115232

(57) **Abstract**

An electrode terminal for a secondary battery, the electrode terminal interposed between polyolefin-based resin layers facing each other by thermal fusion under pressure at an outer edge portion of a packaging material, the packaging material including a multi-layer sheet including a polyolefin-based resin layer on which at least a metal layer is laminated, and the packaging material sealing at least a positive electrode, a negative electrode, and an electrolyte therein. The electrode terminal includes a metal terminal that is connected to at least one of the positive electrode and the negative electrode; and a corrosion-resistant protective layer that is formed on a surface of the metal terminal. The corrosion-resistant protective layer includes a layer (A) that contains the following component (A), and any one or both of a layer (X) that contains the following component (X) and a layer (Y) that contains the following component (Y).
Component (A): Component composed of a rare-earth element oxide (a) and phosphoric acid or phosphate (a2) which is blended in an amount of 1 part by mass to 100 parts by mass with respect to 100 parts by mass of the rare-earth element oxide (a).
Component (X): Component composed of an anionic polymer (x1) and a cross-linking agent (x2) that cross-links the anionic polymer (x1).
Component (Y): Component composed of a cationic polymer (y1) and a cross-linking agent (y2) that cross-links the cationic polymer (y1).

## Description

### TECHNICAL FIELD

The present invention relates to an electrode terminal for a secondary battery in which a laminate packaging material is used.

Priority is claimed on Japanese Patent Application No. 2012-018960, filed January 31, 2012, the content of which is incorporated herein by reference.

### BACKGROUND ART

Secondary batteries are classified into an aqueous battery using water as a solvent that dissolves an electrolyte, and a non-aqueous battery using an organic solvent as the solvent that dissolves the electrolyte. Recently, miniaturization of portable devices or effective usage of energy from natural power generation has been required. In the aqueous battery, such as a nickel-hydrogen battery and a lead storage battery of the related art, a voltage limit in a cell unit is approximately 1.2 V due to a restriction in a water electrolysis voltage. Therefore, a non-aqueous battery, particularly, a lithium ion battery, in which a further higher voltage is obtained and an energy density is high, has become more important.

The lithium ion battery has a configuration in which battery elements such as a positive electrode material, a negative electrode material, a separator that prevents the electrodes from coming into contact with each other, and an electrolyte layer are sealed inside a packaging material (also, referred to as an exterior material). The electrolyte layer includes an electrolytic solution composed of an aprotic solvent such as propylene carbonate, ethylene carbonate, dimethyl carbonate, diethyl carbonate, and ethyl methyl carbonate, and an electrolyte, or a polymer gel in which the electrolytic solution is impregnated. In the case of the lithium ion battery, a lithium salt such as LiPF6 and LiBF4 is used as the electrolyte.

In addition, in the lithium ion battery, to extract power and to supply the power to the outside, an electrode terminal (tab), which includes a metal terminal (lead) that is connected to the positive electrode or the negative electrode, is interposed between sealant layers of the packaging material, and is thermally fused under pressure. Typically, a sealant is provided on an outer surface of the metal terminal to further increase a sealing performance and adhesiveness between the metal terminal and the packaging material.

As the packaging material of the lithium ion battery, a metal can is conventionally used. However, a packaging material having a configuration in which a multi-layer film is laminated is used in accordance with a demand for reduction in thickness or diversification of products. As the multi-layer film that constitutes the packaging material, a laminate film in which aluminum foil and a resin film are laminated is used because it is produced with low cost. In this laminate film, a sealant layer is used on the innermost side when being used as the packaging material to give a heat-sealing property at least. As the sealant layer, a polyolefin-based resin is generally used.

A pair of the laminate films is disposed in such a manner that sealant layers of respective laminate films face to each other, and outer edge portions of the laminate films are thermally fused under pressure, or a sheet of laminate film is folded back in such a manner that respective portions of the sealant layer face to each other, and then the outer edge portions are thermally fused under pressure to form a vessel shape, thereby obtaining a packaging material for secondary batteries.

Electrolytic solution resistance is required for the electrode terminal and the packaging material. Particularly, with regard to the electrode terminal, the electrolytic solution directly comes into contact with the metal terminal, and thus strict electrolytic solution resistance is required compared to the packaging material. As a lithium salt that is an electrolyte, salts such as LiPF₆ and LiBF₄ are used. However, these salts generate hydrofluoric acid due to a hydrolysis reaction with moisture, and thus corrosion on a surface of the metal terminal, a decrease in laminate strength between respective layers of the packaging material, delamination, and the like may occur in some cases. For example, generally, aluminum, nickel, or copper is used as the metal terminal, and thus there is a concern that adhesiveness between the metal terminal and the packaging material may be damaged by corrosion of the metal terminal due to the electrolytic solution.

In a case of using a packaging material provided with a metal layer such as aluminum foil, moisture penetration from a surface of the packaging material is almost blocked. However, the packaging material has a structure in which multi-layer films are laminated, and thus hydrolysis of a lithium salt occurs due to moisture that intrudes into the packaging material from an end surface of a sealing portion of a sealant layer, and thus it is difficult to completely prevent hydrofluoric acid from being generated.

In addition, in an environment in which the lithium ion batteries are used, an accident such as dropping a cellular phone into water by mistake can be easily assumed. In this case, there is a concern that the metal terminal is corroded due to an increase in the amount of hydrofluoric acid generated due to excessive moisture absorption, and as a result, there is a concern that delamination may occur.

PTL 1 discloses a method in which a solution composed of a phosphate, a chromate, a fluoride, and a triazine thiol compound is applied onto a surface of a metal sheet that becomes a tab material, and the solution is dried and heated to form a chemical conversion coating layer. PTL 2 discloses a method in which a treatment liquid, which contains a resin component including polyacrylic acid and a metal salt, is applied onto a surface of a lead wire metal to form a composite film layer. PTL 1 and PTL 2 describe that according to the methods, metal corrosion due to the electrolytic solution is suppressed, and thus reliability in adhesiveness between the metal terminal and the sealant is improved.

However, in a usage for a large-sized battery represented by an in-vehicle battery, a battery for power generation, and the like, further improvement in the electrolytic solution resistance and the adhesiveness is required.

### PRIOR ART DOCUMENTS

### PATENT DOCUMENTS

[PTL 1] Japanese Unexamined Patent Application, First Publication No. 2001-307715
[PTL 2] Japanese Unexamined Patent Application, First Publication No. 2006-128096

### SUMMARY OF THE INVENTION

### PROBLEMS TO BE SOLVED BY THE INVENTION

The invention has been made in consideration of the above-described circumstances, and an object thereof is to provide an electrode terminal for secondary batteries which is excellent in electrolytic solution resistance and which is capable of maintaining adhesiveness with a laminate packaging material for a long period of time when the electrode terminal is interposed in the laminate packaging material in which a sealant layer on a battery inner layer side is constituted by a polyolefin-based resin, and thermal fusion is performed to obtain a secondary battery.

### MEANS FOR SOLVING THE PROBLEMS

The present inventors have made a thorough investigation, and have obtained the following finding. When a corrosion-resistant protective layer, which has a single-layer structure or a multi-layer structure and which contains a specific component, is formed on a surface of a metal terminal, improvement in electrolytic solution resistance, improvement in adhesiveness with a polyolefin-based resin layer that is a sealant, simplification of a process, and the like can be achieved in comparison to a metal terminal for secondary batteries which is subjected to a surface treatment such as a chromate treatment in the related art.

The invention has been made on the basis of the above-described finding, and has the following aspects.

[1] According to a first aspect of the invention, an electrode terminal for secondary batteries which is interposed between polyolefin-based resin layers facing each other by thermal fusion under pressure at an outer edge portion of a packaging material, the packaging material including a multi-layer sheet including a polyolefin-based resin layer on which at least a metal layer is laminated, and the packaging material sealing at least a positive electrode, a negative electrode, and an electrolyte therein. The electrode terminal includes a metal terminal that is connected to at least one of the positive electrode and the negative electrode, and a corrosion-resistant protective layer that is formed on a surface of the metal terminal. The corrosion-resistant protective layer includes a layer (A) that contains the following component (A), and any one or both of a layer (X) that contains the following component (X) and a layer (Y) that contains the following component (Y).
   Component (A): Component composed of a rare-earth element oxide (a1) and phosphoric acid or phosphate (a2) which is blended in an amount of 1 part by mass to 100 parts by mass with respect to 100 parts by mass of the rare-earth element oxide (a1).
   Component (X): Component composed of an anionic polymer (x1) and a cross-linking agent (x2) that cross-links the anionic polymer (x1).
   Component (Y): Component composed of a cationic polymer (y1) and a cross-linking agent (y2) that cross-links the cationic polymer (y1).
[2] According to a second aspect of the invention, an electrode terminal for secondary batteries which is interposed between polyolefin-based resin layers facing each other by thermal fusion under pressure at an outer edge portion of a packaging material, the packaging material including a multi-layer sheet including a polyolefin-based resin layer on which at least a metal layer is laminated and the packaging material sealing at least a positive electrode, a negative electrode, and an electrolyte therein. The electrode terminal includes a metal terminal that is connected to at least one of the positive electrode and the negative electrode, and a corrosion-resistant protective layer that is formed on a surface of the metal terminal. The corrosion-resistant protective layer includes a layer (M) that contains the following component (A), and any one or both of the following component (X) and the following component (Y).
   Component (A): Component composed of a rare-earth element oxide (a1) and phosphoric acid or phosphate (a2) which is blended in an amount of 1 part by mass to 100 parts by mass with respect to 100 parts by mass of the rare-earth element oxide (a1).
   Component (X): Component composed of an anionic polymer (x1) and a cross-linking agent (x2) that cross-links the anionic polymer (x1).
   Component (Y): Component composed of a cationic polymer (y1) and a cross-linking agent (y2) that cross-links the cationic polymer (y1).
[3] According to a third aspect of the invention, an electrode terminal for secondary batteries which is interposed between polyolefin-based resin layers facing each other by thermal fusion under pressure at an outer edge portion of a packaging material, the packaging material including a multi-layer sheet including a polyolefin-based resin layer on which at least a metal layer is laminated, and the packaging material sealing at least a positive electrode, a negative electrode, and an electrolyte therein. The electrode terminal includes a metal terminal that is connected to at least one of the positive electrode and the negative electrode, and a corrosion-resistant protective layer that is formed on a surface of the metal terminal. The corrosion-resistant protective layer includes a layer (M) that contains the following component (A) and any one or both of the following component (X) and the following component (Y), and any one or both of a layer (X) that contains the following component (X) and a layer (Y) that contains the following component (Y).
   Component (A): Component composed of a rare-earth element oxide (a1) and phosphoric acid or phosphate (a2) which is blended in an amount of 1 part by mass to 100 parts by mass with respect to 100 parts by mass of the rare-earth element oxide (a1).
   Component (X): Component composed of an anionic polymer (x1) and a cross-linking agent (x2) that cross-links the anionic polymer (x1).
   Component (Y): Component composed of a cationic polymer (y1) and a cross-linking agent (y2) that cross-links the cationic polymer (y1).
[4] In the electrode terminal for secondary batteries according to [1] to [3], in the corrosion-resistant protective layer, a mass m_{A} of the component (A) per unit area may be 0.010 g/m² to 0.200 g/m².
[5] In the electrode terminal for secondary batteries according to [1] to [4], in the corrosion-resistant protective layer, a mass m_{A} (g/m²) of the component (A) per unit area, a mass m_{X} (g/m²) of the component (X) per unit area, and a mass m_{Y} (g/m²) of the component (Y) per unit area may satisfy a relationship of Expression: 2≥ (m_{X}+m_{Y})/m_{A}.
[6] In the electrode terminal for secondary batteries according to [1] to [5], the layer (A) or the layer (M) may be directly laminated on the metal terminal.
[7] In the electrode terminal for secondary batteries according to [1] to [6], the anionic polymer (x1) may be at least one kind selected from the group consisting of copolymers that contain poly(meth)acrylic acid, poly(meth)acrylate, (meth)acrylic acid, and (meth)acrylate as a main component.
[8] In the electrode terminal for secondary batteries according to [1] to [7], the cationic polymer (y1) may be at least one kind selected from the group consisting of polyethyleneimine, an ionic polymer complex composed of polyethyleneimine and a polymer having carboxylic acid, a primary amine graft acrylic resin in which primary amine is grafted in acryl main skeleton, polyallylamine, derivatives of polyallylamine, and aminophenol.
[9] In the electrode terminal for secondary batteries according to [1] to [8], each of the cross-linking agents (x2) and (y2) may be at least one kind selected from the group consisting of compounds having any functional group among an isocyanate group, a glycidyl group, a carboxyl group, and an oxazoline group, and a silane coupling agent.
[10] In the electrode terminal for secondary batteries according to [1] to [9], the rare-earth element oxide (a1) may be cerium oxide.
[11] In the electrode terminal for secondary batteries according to [1] to [10], the phosphoric acid or phosphate (a2) may be condensed phosphoric acid or condensed phosphate.
[12] In the electrode terminal for secondary batteries according to [1] to [11], a sealant may be further provided on the corrosion-resistant protective layer.
[13] In the electrode terminal for secondary batteries according to [1] to [3], in the packaging material, a pair of the multi-layer sheets may be disposed in such a manner that the polyolefin-based resin layers face each other, and outer edge portions of the multi-layer sheets may be thermally fused under pressure.
[14] In the electrode terminal for secondary batteries according to [1] to [3], in the packaging material, respective outer edge portions of the multi-layer sheet, which is folded back such that respective portions of the polyolefin-based resin layer face each other, may be thermally fused under pressure.

### Effects of the Invention

According to the aspects of the invention, it is possible to provide an electrode terminal for secondary batteries which is excellent in electrolytic solution resistance and which is capable of maintaining adhesiveness with a laminate packaging material for a long period of time when the electrode terminal is interposed in the laminate packaging material in which a sealant layer on a battery inner layer side is constituted by a polyolefin-based resin, and thermal fusion is performed to obtain a secondary battery.

### BRIEF DESCRIPTION OF THE DRAWINGS

FIG. 1 is a schematic cross-sectional diagram of an electrode terminal 20 according to a first embodiment of the invention.
FIG. 2A is an enlarged cross-sectional diagram illustrating a preferred embodiment of a corrosion-resistant protective layer 22.
FIG. 2B is an enlarged cross-sectional diagram illustrating a preferred embodiment of the corrosion-resistant protective layer 22.
FIG. 2C is an enlarged cross-sectional diagram illustrating a preferred embodiment of the corrosion-resistant protective layer 22.
FIG. 3 is a schematic cross-sectional diagram of a multi-layer sheet 30 that constitutes a packaging material for secondary batteries.
FIG. 4 is a schematic cross-sectional diagram of a portion (thermal fusion portion) in which the electrode terminal 20 is interposed between polyolefin-based resin layers, which face each other, of the packaging material for secondary batteries which includes a multi-layer sheet 30, and which is thermally fused under pressure.
FIG. 5A is a schematic cross-sectional diagram of a secondary battery.
FIG. 5B is a schematic diagram of the secondary battery.

### DETAILED DESCRIPTION OF THE INVENTION

Hereinafter, a first embodiment of the invention will be described in detail.

An electrode terminal for secondary batteries according to a first embodiment of the invention is an electrode terminal for secondary batteries which is interposed between polyolefin-based resin layers facing each other by thermal fusion under pressure at an outer edge portion of a packaging material (hereinafter, referred to as a packaging material for secondary batteries), the packaging material including a multi-layer sheet on which at least a metal layer is laminated, and the packaging material sealing at least a positive electrode, a negative electrode, and an electrolyte therein. The electrode terminal includes a metal terminal that is connected to at least one of the positive electrode and the negative electrode, and a corrosion-resistant protective layer that is formed on a surface of the metal terminal. The corrosion-resistant protective layer includes a specific layer. The packaging material may be formed by disposing a pair of multi-layer sheets such that the polyolefin-based resin layers of the multi-layer sheets face each other and by thermally fusing outer edge portions of the multi-layer sheets under pressure. Alternatively, the packaging material may be formed by folding one multi-layer sheet such that respective portions of the polyolefin-based resin layer face each other, and by thermally fusing outer edge portions of the multi-layer sheet under pressure. Specifically, in a first aspect, the corrosion-resistant protective layer includes the following layer (A) and any one or both of the following layers (X) and (Y). In a second aspect, the corrosion-resistant protective layer includes the following layer (M). In a third aspect, the corrosion-resistant protective layer includes the following layer (M), and any one or both of the following layers (X) and (Y).
Layer (A): Layer containing the following component (A).
Layer (X): Layer containing the following component (X).
Layer (Y): Layer containing the following component (Y)
Layer (M): Layer containing the following component (A), and any one or both of the following components (X) and (Y).
Component (A): Component composed of a rare-earth element oxide (a1), and phosphoric acid or phosphate (a2) which is blended in an amount of 1 part by mass to 100 parts by mass with respect to 100 parts by mass of the rare-earth element oxide (a1).
Component (X): Component composed of an anionic polymer (x1), and a cross-linking agent (x2) that cross-links the anionic polymer (x1).
Component (Y): Component composed of a cationic polymer (y1), and a cross-linking agent (y2) that cross-links the cationic polymer (y1).

The first aspect to the third aspect are common to each other in an aspect in which the corrosion-resistant protective layer contains the component (A) and any one or both of the components (X) and (Y). By providing the corrosion-resistant protective layer on a surface of a metal terminal, electrolytic solution resistance is improved, and corrosion in the metal terminal due to an electrolytic solution or a decrease in adhesion strength or peeling-off between the metal terminal and a sealant due to the corrosion can be suppressed. As a result, adhesion durability between the metal terminal and the sealant is improved.

Hereinafter, a first embodiment of the invention will be described with reference to the attached drawings.

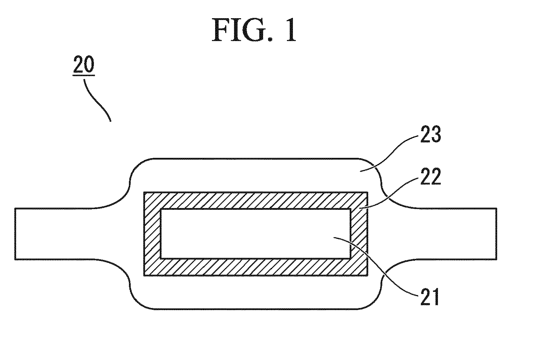

FIG. 1 shows a schematic cross-sectional diagram of an electrode terminal 20 according to the first embodiment of the invention. Specifically, FIG. 1 shows a schematic cross-sectional diagram illustrating a portion (thermally fused portion) which is interposed between polyolefin-based resin layers, which face each other, of a packaging material 100 for secondary batteries and which is thermally fused under pressure during manufacturing of secondary batteries.

The electrode terminal 20 is constituted by a metal terminal (lead) 21, a corrosion-resistant protective layer 22 that covers an outer circumferential surface of the metal terminal 21, and a sealant 23 that covers the corrosion-resistant protective layer 22.

### <Metal Terminal 21>

In secondary batteries, the metal terminal 21 is connected to a positive electrode 11 or a negative electrode 12 which is sealed inside the packaging material 100 for secondary batteries, and extends from the positive electrode 11 or the negative electrode 12 toward the outside of the packaging material 100 for secondary batteries.

The metal terminal 21 is not particularly limited and may be appropriately selected among metal terminals that are known in accordance with a secondary battery that is used. A material of the metal terminal 21 depends on a material of a current collector inside the secondary battery.

For example, in a lithium ion battery, aluminum is used for a current collector of a positive electrode, and copper is used for a current collector of a negative electrode. In a case where the metal terminal 21 is a metal terminal (positive electrode terminal) that is connected to the positive electrode of the lithium ion battery, it is preferable to use aluminum. Particularly, from the viewpoint of corrosion resistance against an electrolytic solution, it is preferable to use an aluminum material such as 1N30 having purity of 97% or more. In addition, the thermally fused portion between the electrode terminal and the packaging material for secondary batteries may be bent in some cases, and thus it is preferable to use an O-material that is thermally refined by sufficient annealing so as to add flexibility. In a case where the metal terminal 21 is a metal terminal (negative electrode terminal) that is connected to the negative electrode of the lithium ion battery, untreated copper is less used in consideration of corrosion resistance and it is preferable to use nickel-plated copper or nickel.

It is preferable that the thickness of the metal terminal 21 be 50 µm to 500 µm, and more preferably 100 µm to 200 µm. When the thickness is 50 µm or more, sufficient rigidity is provided, and thus breaking or fracture is less likely to occur. On the other hand, the metal terminal 21 is interposed in the packaging material 100 for secondary batteries, and is thermally fused under pressure. Therefore, when the thickness of the metal terminal 21 exceeds 500 µm, the film thickness of the sealant 23 or a sealant layer of the packaging material 100 for secondary batteries decreases, and there is a concern that a decrease in insulating properties may be caused.

### <Corrosion-Resistant Protective Layer 22>

As described above, in the first aspect, the corrosion-resistant protective layer 22 includes the following layer (A) and any one or both of the following layers (X) and (Y). In the second aspect, the corrosion-resistant protective layer 22 includes the following layer (M). In the third aspect, the corrosion-resistant protective layer 22 includes the following layer (M) and any one or both of the following layers (X) and (Y).
Layer (A): Layer containing the following component (A).
Layer (X): Layer containing the following component (X).
Layer (Y): Layer containing the following component (Y)
Layer (M): Layer containing the following component (A), and any one or both of the following components (X) and (Y).
Component (A): Component composed of a rare-earth element oxide (a1) and phosphoric acid or phosphate (a2) which is blended in an amount of 1 part by mass to 100 parts by mass with respect to 100 parts by mass of the rare-earth element oxide (a1).
Component (X): Component composed of an anionic polymer (x1) and a cross-linking agent (x2) that cross-links the anionic polymer (x1).
Component (Y): Component composed of a cationic polymer (y1) and a cross-linking agent (y2) that cross-links the cationic polymer (y1).

Among the above-described components, the component (A) contributes to prevention of corrosion of the metal terminal, improvement in adhesiveness between the metal terminal 21 and the sealant 23, and the like. In addition, the component (X) has an operation such as cation catcher that traps ion contamination derived from phosphate contained in the component (A) (particularly, contamination derived from Na ions). In addition, the component (X) has an operation such as protection of a hard and brittle layer (A) and contributes to improvement in stability of the corrosion-resistant protective layer 22. In addition, the component (Y) has an operation such as anion catcher that traps a fluorine ion with a cation group, and contributes to improvement in electrolytic solution resistance or hydrofluoric acid resistance.

Accordingly, the corrosion-resistant protective layer 22, which contains these components in the same layer or layers different from each other, has an effect of preventing corrosion of the metal terminal 21 and improves electrolytic solution resistance, hydrofluoric acid resistance, water resistance, and the like of the electrode terminal 20.

Particularly, in a case where a layer of the corrosion-resistant protective layer 22, which comes into contact with the metal terminal 21, is the layer (A) or the layer (M) which contains the component (A), that is, where the layer (A) or the layer (M) is directly laminated on the metal terminal 21, the rare-earth element oxide (a1) having corrosion resistance directly comes into contact with the metal terminal 21, and thus favorable corrosion resistance can be exhibited. As a result, the above-described effect is further improved.

In addition, in a case where a layer of the corrosion-resistant protective layer 22, which comes into contact with the sealant 23, is the layer (X), the layer (Y), or the layer (M), since these layers contain a resin component (anionic polymer (x1) or a cationic polymer (y1)), the adhesiveness between the corrosion-resistant protective layer 22 and the sealant 23 is excellent. Accordingly, when the electrode terminal 20 is thermally fused to a polyolefin-based resin layer of the packaging material 100 for secondary batteries under pressure, favorable heat-sealing properties can be obtained.

The components (A), (X), and (Y) will be described later in detail.

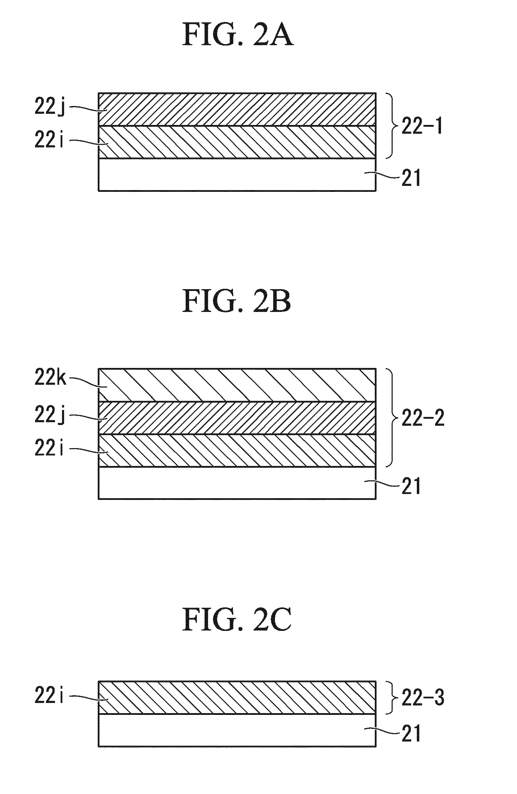

A preferred layer configuration of the corrosion-resistant protective layer 22 will be described with reference to FIGS. 2A to 2C.

FIG. 2A shows an enlarged cross-sectional diagram of a two-layer structured corrosion-resistant protective layer 22 (hereinafter, referred to as a corrosion-resistant protective layer 22-1).

The corrosion-resistant protective layer 22-1 has a structure in which a first corrosion-resistant protective layer 22i and a second corrosion-resistant protective layer 22j are laminated in this order from the metal terminal 21 side.

The first corrosion-resistant protective layer 22i is the layer (A) or the layer (M), and the second corrosion-resistant protective layer 22j is the layer (X) or the layer (Y).

Since the layer (A) or the layer (M) which contains the component (A) is directly laminated on the metal terminal 21 as the first corrosion-resistant protective layer 22i of the corrosion-resistant protective layer 22, the rare-earth element oxide (a1) having corrosion resistance directly comes into contact with the metal terminal 21, and thus satisfactory corrosion resistance can be exhibited.

In addition, since the layer (X) that contains the component (X) or the layer (Y) that contains the component (Y) directly comes into contact with the sealant 23, the stability, the electrolytic solution resistance or the hydrofluoric acid resistance, the adhesiveness with the sealant 23, and the like of the corrosion-resistant protective layer 22 are improved.

FIG. 2B shows an enlarged cross-sectional diagram of three-layer structured corrosion-resistant protective layer 22 (hereinafter, referred to as a corrosion-resistant protective layer 22-2).

The corrosion-resistant protective layer 22-2 has a structure in which a first corrosion-resistant protective layer 22i, a second corrosion-resistant protective layer 22j, and a third corrosion-resistant protective layer 22k are laminated in this order from the metal terminal 21 side.

Each of the first corrosion-resistant protective layer 22i and the second corrosion-resistant protective layer 22j are the same as described above. The third corrosion-resistant protective layer 22k is the layer (X) or the layer (Y).

When the third corrosion-resistant protective layer 22k is provided, the corrosion resistance, the adhesiveness, and the like are further improved than the corrosion-resistant protective layer 22-1.

FIG. 2C shows an enlarged cross-sectional diagram of a single-layer structured corrosion-resistant protective layer 22 (hereinafter, referred to as a corrosion-resistant protective layer 22-3).

The corrosion-resistant protective layer 22-3 is constituted by only the first corrosion-resistant protective layer 22i. Accordingly, as the first corrosion-resistant protective layer 22i, the layer (M) that contains the component (A) and any one or both of the components (X) and (Y) is used.

A preferred combination example of the first corrosion-resistant protective layer 22i, the second corrosion-resistant protective layer 22j, and the third corrosion-resistant protective layer 22k, and the layers (A), (X), (Y), and (M) is shown in Table 1 to be described below. However, a layer configuration of the corrosion-resistant protective layer 22 is not limited thereto, and various modifications may be made within the scope of the invention.

**[Table 1]**

| | First corrosion-resistant protective layer 22i | Second corrosion-resistant protective layer 22j | Third corrosion-resistant protective layer 22k |
|---|---|---|---|
| Combination Example 1 | Layer (A) | Layer (X) | |
| Combination Example 2 | Layer (A) | Layer (Y) | |
| Combination Example 3 | Layer (A) | Layer (X) | Layer (Y) |
| Combination Example 4 | Layer (A) | Layer (Y) | Layer (X) |
| Combination Example 5 | Layer (M) | | |
| Combination Example 6 | Layer (M) | Layer (X) | |
| Combination Example 7 | Layer (M) | Layer (Y) | |
| Combination Example 8 | Layer (M) | Layer (X) | Layer (Y) |
| Combination Example 9 | Layer (M) | Layer (Y) | Layer (X) |

When the anionic polymer (x1) of the component (X) or the cationic polymer (y1) of the component (Y) form a composite with the rare-earth element oxide (a1) or the phosphoric acid or phosphate (a2) in the component (A), the function of the electrolytic solution resistance or the hydrofluoric acid resistance tends to be more effectively exhibited in comparison to a case where each of the anionic polymer (x1) and the cationic polymer (y1) is present alone. Accordingly, when a ratio of the component (X) or the component (Y) in the corrosion-resistant protective layer 22 increases more than necessary, the component (A) in the corrosion-resistant protective layer 22 resultantly decreases, and thus the ratio of the anionic polymer (x1) or the cationic polymer (y1), which is present alone without forming a composite with the rare-earth element oxide (a1) or the phosphoric acid or phosphate (a2), increases. As a result, the function of the electrolytic solution resistance or the hydrofluoric acid resistance may not be sufficiently exhibited in some cases, and thus there is a concern that the electrolytic solution resistance or the hydrofluoric acid resistance may decrease.

Accordingly, it is preferable that in the corrosion-resistant protective layer 22, a mass m_{A} (g/m²) of the component (A) per unit area, a mass m_{X} (g/m²) of the component (X) per unit area, and a mass m_{Y} (g/m²) of the component (Y) per unit area satisfy a relationship of Formula: 2≥(m_{X}+m_{Y})/m_{A} so as to more effectively exhibit the electrolytic solution resistance or the hydrofluoric acid resistance.

Even in a case where the relationship {(m_{X}+m_{Y})m_{A}} in the mass of respective layers exceeds 2, the effect of the invention may be exhibited in some cases. However, in this case, a coated amount of a coating liquid during forming the layer (X), (Y), or (M) increases, and thus cross-linking of the anionic polymer (x1) or the cationic polymer (y1) may become difficult in some cases. A drying temperature may be set to be high or a curing time may be set to be long to sufficiently cross-link the anionic polymer (x1) or the cationic polymer (y1). However, there is a concern that productivity may resultantly decrease.

Accordingly, from the viewpoints of improving the electrolytic solution resistance or the hydrofluoric acid resistance while maintaining the productivity, it is preferable that the relationship {(m_{X}+m_{Y})/m_{A}} in the mass of respective layers satisfy 2≥(m_{X}+m_{Y})/m_{A} more preferably 1.5≥(m_{X}+m_{Y})/m_{A}≥0.01, and still more preferably 1.0≥(m_{X}+m_{Y})/m_{A}≥0.1.

In addition, it is preferable that the mass mA of the component (A) per unit area in the corrosion-resistant protective layer 22 be 0.010 g/m² to 0.200 g/m², and more preferably 0.040 g/m² to 0.100 g/m².

When the mass mA is within the above-described range, a cohesive force of rare-earth element oxide sol can be maintained while maintaining the electrolytic solution resistance, and thus the adhesion strength that is required for the metal terminal for lithium batteries can be sufficiently applied.

On the other hand, when the mass mA becomes smaller than the lower limit (0.010 g/m²), the absolute amount of the rare-earth element oxide (a1) or the phosphoric acid or phosphate (a2) which has an effect of preventing corrosion in the metal terminal 21 decreases, and thus it is difficult to obtain the electrolytic solution resistance or the hydrofluoric acid resistance. In addition, when the mass m_{A} becomes larger than the upper limit (0.200 g/m²), a sol-gel reaction along with drying of rare-earth element oxide sol is less likely to progress (that is, a quantity of heat becomes deficient, and thus the sol-gel reaction is less likely to progress). As a result, a cohesive force of the rare-earth element oxide sol decreases, and thus there is a concern that the adhesiveness with the sealant may be decreased.

The corrosion-resistant protective layer 22 can be formed by a coating method in which a coating liquid containing a desired component is coated and dried.

For example, as a coating liquid for formation of the layer (A), a coating liquid (rare-earth element oxide sol) which is obtained by adding a liquid medium to the component (A) and by mixing the resultant mixture into a sol state is used. In the rare-earth element oxide sol, the rare-earth element oxide (a1) is dispersed in the liquid medium, and the dispersion is stabilized by the phosphoric acid or phosphate (a2).

As the liquid medium that is used in the rare-earth element oxide sol, for example, various liquid media such as a water-based medium, an alcohol-based medium, a hydrocarbon-based medium, a ketone-based medium, an ester-based medium, and an ether-based medium may be used. Among these, the water-based medium and the alcohol-based medium are preferable, and particularly, the water-based medium is preferable. Examples of the water-based medium include water, and examples of the alcohol-based medium include methanol, ethanol, and the like. One kind of the liquid medium may be used alone or two or more kinds thereof may be mixed and used.

In the coating liquid for forming the layer (A), a solid-content concentration of the component (A) is not particularly limited, and may be appropriately selected according to various kinds of coating methods so as to obtain optimal viscosity and application amount.

In a case of using the component (A) as the rare-earth element oxide sol, dispersion-stabilizing agents other than the phosphoric acid or phosphate (a2), for example, inorganic acid such as nitric acid and hydrochloric acid, and organic acid such as acetic acid, malic acid, ascorbic acid, and lactic acid may be mixed in the rare-earth element oxide sol as a dispersion-stabilizing agent as long as the effect of the invention is not deteriorated.

As a coating liquid for forming layer (X), a coating liquid obtained by dissolving or dispersing the component (X) in a liquid medium is used.

Examples of the liquid medium that is used in the coating liquid for forming the layer (X) include the same liquid media as the exemplified liquid medium which is used in the rare-earth element oxide sol. Among these, the water-based medium and the alcohol-based medium are preferable.

In the coating liquid for forming the layer (X), a solid-content concentration of the component (X) is not particularly limited, and may be appropriately selected according to various kinds of coating methods so as to obtain optimal viscosity and application amount.

As a coating liquid for forming the layer (Y), it is possible to use the same coating liquid as the coating liquid for forming the layer (X) except that the component (Y) is used instead of the component (X).

As a coating liquid for forming the layer (M), a coating liquid obtained by mixing any one or both of the components (X) and (Y) in the rare-earth element oxide sol may be used. At this time, the component (X) or the component (Y) may be dissolved or dispersed in a liquid medium in advance before mixing.

In the coating liquid for forming the layer (M), a solid-content concentration is not particularly limited, and may be appropriately selected according to various kinds of coating methods so as to obtain optimal viscosity and application amount.

As a coating method of the coating liquid, a known coating method may be used, and examples of the coating method include a gravure coating method, a reverse coating method, a roll coating method, a bar coating method, and the like.

With regard to drying conditions, in a case of the layer (A), heating at 100°C to 230°C for 3 seconds to 15 seconds is preferable. In a case of the layer (X) or (Y), heating at 60°C to 180°C for 3 seconds to 15 seconds is preferable. In a case of the layer (M), heating at 60°C to 230°C for 3 seconds to 15 seconds is preferable.

In the related art, for a corrosion-resistant treatment of the metal terminal, a chemical conversion treatment represented by a chromate treatment is used. In the chemical conversion treatment, an inclined structure is formed between the metal terminal and a chemical conversion treatment layer. Therefore, particularly, the metal terminal is treated by using a chemical conversion treatment agent in which hydrofluoric acid, hydrochloric acid, nitric acid, sulfuric acid, or a salt thereof is mixed, and the chemical conversion treatment layer is formed on the metal terminal through reaction with chrome or a non-chromic compound in many cases. As an example of the chemical conversion treatment, a phosphoric acid chromate treatment may be exemplified. A basic principle of this treatment in each of an immersion type and an application type using a resin binder is the same. However, the chemical conversion treatment agent thereof uses an acid, and thus corrosion occurs in working environment or a coating apparatus.

On the other hand, the coating of the coating liquid such as the above-described rare-earth element oxide sol is a coating type corrosion-resistant treatment, and it is not necessary to form the inclined structure with regard to the metal terminal. Therefore, the definition is different from the chemical conversion treatment. Accordingly, characteristics of the coating liquid do not concern acidity, alkalinity, or neutrality.

In addition, the coating of the coating liquid can be performed by a typical coating method.

Accordingly, according to this embodiment, the corrosion-resistant protective layer is formed by a simple method using a typical coating method without using an environmentally harmful material such as hexavalent chrome, and it is possible to obtain an excellent effect of preventing corrosion in the metal terminal.

### <Sealant 23>

The sealant 23 is constituted by a pair of resin films that are provided such that both sides in a thickness direction of the metal terminal 21, that is, in a short-side direction of an approximately rectangular cross-section of the metal terminal 21 are interposed in the pair of resin films, and has a bent shape in accordance with the shape of the metal terminal 21. The pair of resin films integrated by being bonded to each other at an approximately intermediate position of a dimension of the metal terminal 21 in a thickness direction in a state in which a surface extending in a width direction of the metal terminal 21, that is, in a long-side direction of the approximately rectangular cross-section of the metal terminal 21 is set as a boundary.

The sealant 23 is not requisite. However, when the sealant 23 is provided, a sealing performance when the metal terminal 21 and the packaging material 100 for secondary batteries are thermally fused under pressure is further improved.

The sealant 23 is required to be excellent in an adhesive property with both of the metal terminal 21 and the innermost polyolefin-based resin layer of the packaging material 100 for secondary batteries. From this viewpoint, as a material of the resin film that constitute the sealant 23, a polyolefin-based resin is preferable. Examples of the polyolefin-based resin include polyolefin resins such as low-density, intermediate density, and high-density polyethylenes, polypropylenes, and polybutens; acid-modified polyolefin resins obtained by graft-modifying these polyolefin resins with maleic anhydride; and the like. These polyolefin-based resins may be used alone or in combination of two or more kinds thereof. Among these, the acid-modified polyolefin resins obtained by graft-modifying these polyolefin resins with maleic anhydride are preferable.

As the resin film that constitutes the sealant 23, a resin film in which a heat-resistant resin such as polyethylene terephthalate (PET) or polyethylene naphthalate (PEN) is laminated on a polyolefin-based resin such as an acid-modified polyolefin resin may be applied to maintain a shape of the sealant 23 during heating or to prevent a decrease in insulating properties of the sealant 23 during thermal fusion due to reduction in thickness. In this case, both sides of the resin film are constituted by the polyolefin-based resin layer, and the heat-resistant resin layer is provided between the polyolefin-based resin layers.

It is preferable that the thickness of the resin film be 60 µm to 150 µm to obtain satisfactory adhesiveness between the metal terminal 21 and the packaging material 100, and more preferably 80 µm to 100 µm.

The sealant 23 can be formed by a known method. For example, the sealant 23 can be formed by interposing the metal terminal 21, on which the corrosion-resistant protective layer 22 is formed, between the pair of resin films (acid-modified polyolefin resin films and the like), by clamping respective resin films with heating plates from both sides in a thickness direction of the metal terminal 21, and by performing thermal fusion under pressure.

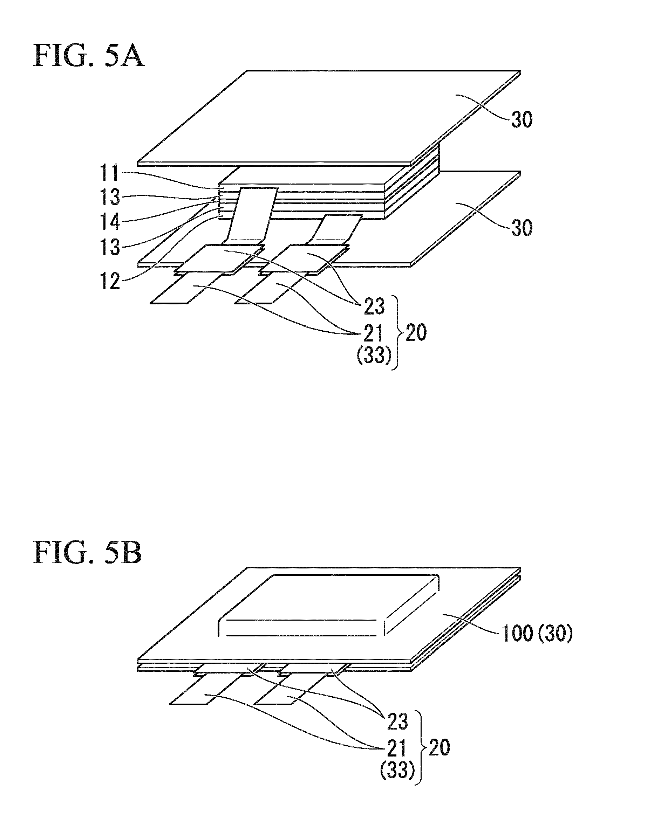

As shown in FIGS. 5A and 5B, the electrode terminal 20 is used to extract electric power from secondary battery elements (a positive electrode 11, a negative electrode 12, an electrolyte layer 13, a separator 14, and the like) that are sealed inside the packaging material 100 for secondary batteries which is constituted by a multi-layer sheet in which at least metal layer is laminated on a polyolefin-based resin layer, and to supply the electric power to the outside. When manufacturing a secondary battery, the metal terminal 21 is connected to the positive electrode 11 or the negative electrode 12 inside the packaging material 100 for secondary batteries, and the metal terminal 21 is interposed between polyolefin-based resin layers of the packaging material 100 for secondary batteries which face to each other such that a part of the metal terminal 21 is exposed to the outside of the packaging material 100 for secondary batteries, and then thermal fusion is performed under pressure.

As an example, first, a pair of multi-layer sheets is prepared, and any one or both of the multi-layer sheets are shaped to form an approximately rectangular concave portion. At this time, multi-layer sheets are shaped such that an inner surface of the concave portion is constituted by the polyolefin-based resin layer. Next, a battery cell (the positive electrode 11, the separator 14, and the negative electrode 12) and an electrode terminal that is connected to the positive electrode 11 or the negative electrode 12 of the battery cell are accommodated in the concave portion of the multi-layer sheet that is shaped. At this time, the electrode terminal is disposed such that a part thereof protrudes to the outside from one side of the multi-layer sheet. Then, one multi-layer sheet is superimposed on an opening side of the concave portion such that polyolefin-based resin layers face each other. The side from which the electrode terminal protrudes is thermally fused, and other two sides are thermally fused. Then, an electrolytic solution is injected from the remaining one side under a vacuum environment. Finally, the remaining one side is thermally fused under pressure to seal the inside, thereby obtaining a secondary battery.

As the multi-layer sheet that constitutes the packaging material 100 for secondary batteries, a multi-layer sheet that is known as a multi-layer sheet for a packaging material for secondary batteries can be used without particular limitation as long as at least a metal layer is laminated on a polyolefin-based resin layer.

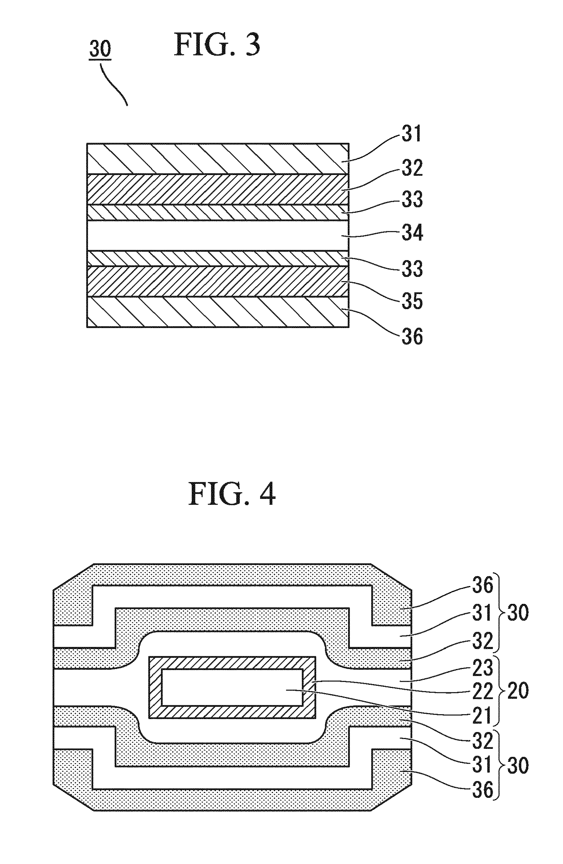

FIG. 3 shows a schematic cross-sectional diagram illustrating an example of the multi-layer sheet that constitutes the packaging material 100 for secondary batteries. The multi-layer sheet 30 of this example has a configuration in which a polyolefin-based resin layer (sealant layer) 31, an inner-layer side adhesive layer 32, a corrosion-resistant protective layer 33, a metal foil layer 34, a corrosion-resistant protective layer 33, an outer-layer side adhesive layer 35, and an outer layer 36 (nylon, PET, and the like) are laminated in this order from an inner layer side.

FIG. 4 shows a schematic cross-sectional diagram of a portion (thermal fusion portion) in which the electrode terminal 20 is interposed between polyolefin-based resin layers, which face each other, of the packaging material 100 for secondary batteries which is constituted by the multi-layer sheet 30, and which is thermally fused under pressure. However, in FIG. 4, among the layers that constitute the multi-layer sheet 30, the corrosion-resistant protective layer 33, the metal foil layer 34, and the outer-layer side adhesive layer 35 are not shown.

Explanation relating to the electrode terminal 20 and the multi-layer sheet 30 is as described above.

Examples of the polyolefin-based resin that constitutes the polyolefin-based resin layer 31 include the same polyolefin-based resin as the polyolefin-based resin exemplified in the description of the sealant 23.

Examples of a metal that constitutes the metal foil layer (metal layer) 34 include aluminum, stainless steel, and the like.

Hereinbefore, the embodiment of the invention has been described in detail, but the invention is not limited thereto. Design modification and the like can be made within a range not departing from the technical idea of the invention.

Examples of secondary batteries to which the electrode terminal of the invention is applied include lithium ion batteries, lithium polymer batteries, lithium ion capacitors, and the like. The electrode terminal of the invention has an excellent effect of preventing corrosion in the metal terminal due to hydrofluoric acid, and thus the electrode terminal is appropriate for lithium ion batteries.

### [Component (A)]

The component (A) is composed of a rare-earth element oxide (a1) and phosphoric acid or phosphate (a2) which is blended in an amount of 1 part by mass to 100 parts by mass with respect to 100 parts by mass of the rare-earth element oxide (a1).

The rare-earth element oxide (a1) has a corrosion preventing effect (inhibitor effect) that is equal to or greater than an effect obtained by performing a chromate treatment in the related art, and is a material appropriate in consideration of an environmental aspect.

The phosphoric acid or phosphate (a2) functions as a dispersion-stabilizing agent of the rare-earth element oxide (a1). When forming the layer (A) or the layer (M), the component (A) is used in a sol state (rare-earth element oxide sol) in which the rare-earth element oxide (a1) is dispersed in a dispersant. The phosphoric acid or phosphate (a2) is blended, and thus dispersion of the rare-earth element oxide (a1) in the rare-earth element oxide sol is stabilized. In addition, the phosphoric acid or phosphate (a2) is blended, and thus dispersion of the rare-earth element oxide (a1) is stabilized. In addition to the stabilization, it is possible to expect improvement in adhesiveness with the metal terminal 21 by using a chelate performance of the phosphoric acid, improvement in a cohesive force of the corrosion-resistant protective layer 22 in consideration of dehydration condensation of phosphoric acid which tends to occur even at a low temperature, and the like. When the cohesive force is improved, the adhesiveness (peeling strength) between the metal terminal 21 and the sealant 23 also tends to be satisfactory. When the adhesiveness is improved, it is possible to apply an inhibitor effect against corrosion in the metal terminal.

### (Rare-Earth Element Oxide (a1))

Examples of the rare-earth element oxide (a1) include cerium oxide, yttrium oxide, neodymium oxide, lanthanum oxide, and the like. Among these, the cerium oxide is preferable.

It is preferable that an average particle size of the rare-earth element oxide (a1) be 1000 nm or less in consideration of densification of a film after being dried, and more preferably 100 nm or less. The lower limit of the average particle size is not particularly limited. However, typically, it is preferable that the lower limit be 10 nm or more in consideration of dispersion properties.

The average particle size of the rare-earth element oxide (a1) is obtained by measuring the average particle size of the rare-earth element oxide (a1) that is dispersed in rare-earth element oxide sol by using a particle size distribution meter.

### (Phosphoric Acid or Phosphate (a2))

Examples of the phosphoric acid include orthophosphoric acid, pyrophosphoric acid, metaphosphoric acid, condensed phosphoric acid, and the like, and examples of the condensed phosphoric acid include trimetaphosphoric acid, tetrametaphosphoric acid, hexametaphosphoric acid, ultra metaphosphoric acid, and the like.

As the phosphate, various kinds of salts such as alkali metal salts or ammonium salts of the above-described phosphoric acids, aluminum phosphate, and titanium phosphate can be used.

Among these, the condensed phosphoric acid, or an alkali metal salt or aluminum salt (condensed phosphate) of the condensed phosphoric acid is preferable in consideration of functional exhibition.

When considering drying and film formation properties (that is, drying capability or quantity of heat) when the component (A) is used in a sol state (rare-earth element oxide sol) for forming the layer (A) or the layer (M), phosphoric acid or phosphate that is excellent in reactivity at a low temperature is preferable as the phosphoric acid or phosphate (a2). From this viewpoint, as a salt that forms phosphate, a Na ion salt excellent in dehydration condensation properties at a low temperature is preferable. In addition, a water soluble salt is preferable.

In the component (A), the phosphoric acid or phosphate (a2) is blended in an amount of 1 part by mass to 100 parts by mass with respect to 100 parts by mass of the rare-earth element oxide (a1). A blending amount of the phosphoric acid or phosphate (a2) is preferably 5 parts by mass to 50 parts by mass, and more preferably 5 parts by mass to 20 parts by mass.

When the blending amount of the phosphoric acid or phosphate (a2) is smaller than the lower limit (5 parts by mass) of the above-described range, there is a concern that stability of the obtained rare-earth element oxide sol decreases, and adhesiveness between the corrosion-resistant protective layer 22 and the metal terminal 21 and adhesiveness between the metal terminal 21 and the sealant 23 may not be sufficient. On the other hand, when the blending amount is larger than the upper limit (50 parts by mass), function of the rare-earth element oxide sol deteriorates.

### [Component (X)]

The component (X) is composed of an anionic polymer (x1) and a cross-linking agent (x2) that cross-links the anionic polymer (x1).

The present inventors have made a thorough investigation by using various compounds to improve resistance such as electrolytic solution resistance and hydrofluoric acid resistance which are required for the metal terminal for lithium batteries, and as a result, they have found that the anionic polymer (x1) is a compound that improves stability of the corrosion-resistant protective layer. As a main cause of the improvement, the following operations and the like may be considered. Specifically, the anionic polymer (x1) traps (cation catcher) ion contamination derived from phosphate contained in the rare-earth element oxide sol (particularly, contamination derived from Na ions). A layer that is formed by only the above-described rare-earth element oxide sol is an aggregate of inorganic particles, and thus the layer is hard and brittle. However, when the anionic polymer (x1) form a composite (a laminated composite or a composite in the same layer), and thus the cohesive force increases.

Generally, without being limited to the use of the packaging material for lithium ion batteries or the electrode terminal, when ion contamination, particularly, alkali metal ions such as Na ions or alkali-earth metal ions are contained in a protective layer that is provided to prevent corrosion in aluminum foil and the like due to a corrosive compound, there is a problem in that intrusion to the protective layer occurs with the ion contamination as a starting point. Accordingly, in a case where Na ions and the like are contained in the above-described component (A), using the anionic polymer (x1) for fixing the ion contamination is effective in consideration of improvement in resistance of the packaging material for lithium batteries.

As described above, the anionic polymer (x1) is a material effective for the metal terminal for lithium batteries, and when a layer having the anionic polymer (x1) is combined with the above-described layer (A) or (M) or when the anionic polymer (x1) is contained in the layer (M), further improvement in functionality may be expected.

However, the anionic polymer (x1) having an anionic group such as carboxyl group is effective in consideration of trapping the ion contamination derived from the component (A), but there is a problem in that the anionic polymer (x1) is a water-based polymer and thus the anionic polymer (x1) alone is not good in water resistance. As a main cause of the inferiority in the water resistance, a fact in which the anionic polymer (x1) is dissolved in water, or a fact in which water resistance at an adhesive interface is problematic is focused. As a solution to the former problem, addition of a cross-linking agent may be exemplified, and as a solution to the latter problem, forming interaction at the adhesive interface may be exemplified. When the cross-linking agent (x2) is blended in the anionic polymer (x1), solubility of the anionic polymer (x1) to water when forming a layer decreases, and water resistance at the adhesive interface is also improved. As a result, the water resistance is improved, and thus the electrolytic solution resistance or the hydrofluoric acid resistance is further improved.

### (Anionic Polymer (x1))

Examples of the anionic polymer (x1) include polymers having an anionic group, and examples of the anionic group include a carboxyl group, a hydroxyl group, and the like. As the anionic polymer (x1), particularly, a polymer having the carboxyl group is preferable.

Examples of preferred anionic polymer (x1) include a copolymer that contains poly(meth)acrylic acid and a salt thereof, and (meth)acrylic acid or a salt thereof as a main component, and the like. "Main component" represents a component a component ratio of which in the copolymer (ratio in the entire repetitive units (monomer unit) that constitute the copolymer) is 50% by mass or more.

Examples of a monomer that is copolymerized with (meth)acrylic acid or a salt thereof to form the copolymer include alkyl(meth)acrylate having an alkyl group such as a methyl group, an ethyl group, an n-propyl group, an i-propyl group, an n-butyl group, an i-butyl group, a t-butyl group, a 2-ethylhexyl group, and a cyclohexyl group; amide group-containing monomer such as (meth)acrylamide, N-alkyl (meth)acrylamide or N,N-dialkyl (meth)acrylamide (as an alkyl group, a methyl group, an ethyl group, an n-propyl group, an i-propyl group, an n-butyl group, an i-butyl group, a t-butyl group, a 2-ethylhexyl group, a cyclohexyl group, and the like), N-alkoxy (meth)acrylamide or N,N-dialkoxy (meth)acrylamide (as an alkoxy group, a methoxy group, an ethoxy group, a butoxy group, an isobutoxy group, and the like), N-methylol (meth)acrylamide, and N-phenyl (meth)acrylamide; hydroxyl group-containing monomer such as 2-hydroxyethyl (meth)acrylate and 2-hydroxypropyl (meth)acrylate; glycidyl group-containing monomer such as glycidyl (meth)acrylate and allyl glycidyl ether; silane-containing monomer such as (meth)acryloxy propyl trimethoxy silane and (meth)acryloxy propyl triethoxy silane; isocyanate group-containing monomer such as (meth)acryloxypropyl isocyanate; and the like.

### (Cross-Linking Agent (x2))

The cross-linking agent (x2) that allows the anionic polymer to have a cross-linking structure may be a cross-linking agent that reacts with a cross-linking reactive group (for example, an anionic group such as a carboxyl group; and a hydroxyl group, glycidyl group, alkoxysilyl group, an isocyanate group, and the like that are introduced arbitrarily) of the anionic polymer to form cross-linking, and the cross-linking agent may be appropriately selected among known cross-linking agents.

Preferred examples of the cross-linking agent (x2) include at least one kind selected from the group consisting of compounds having any functional group among an isocyanate group, a glycidyl group, a carboxyl group, and an oxazoline group, and a silane coupling agent in consideration of reactivity.

Examples of the compounds having the isocyanate group include tolylene diisocyanate, xylylene diisocyanate, or a hydrogen additive thereof; hexamethylene diisocyanate, 4,4'-diphenylmethane diisocyanate, or a hydrogen additive thereof; diisocyanates such as isophorone diisocyanate or adductsobtained by allowing the isocyanates to react with polyhydric alcohol such as trimethylolpropane, or burettes obtained by allowing the isocyanates to react with water; polyisocyanates such as isocyanurate body that is a trimer, or block polyisocyanate obtained by blocking the polyisocyanates with alcohols, lactams, oximes, or the like; and the like.

Examples of the compound having the glycidyl group include epoxy compounds obtained by allowing glycols such as ethylene glycol, diethylene glycol, triethylene glycol, polyethylene glycol, propylene glycol, dipropylene glycol, tripropylene glycol, polypropylene glycol, 1,4-butanediol, 1,6-hexanediol, and neopentyl glycol to react with epichlorohydrin; epoxy compounds obtained by allowing polyhydric alcohols such as glycerin, polyglycerin, trimethylolpropane, pentaerythritol, and sorbitol to react with epichlorohydrin; epoxy compounds obtained by allowing dicarboxylic acids such as phthalic acid, terephthalic acid, oxalic acid, and adipic acid to react with epichlorohydrin, and the like.

Examples of the compound having the carboxyl group include various aliphatic or aromatic dicarboxylic acids, and the like, and alkali (earth) metal salts of poly(meth)acrylic acid or poly(meth)acrylic acid may be used.

As the compound having the oxazoline group, a low-molecular-weight compound having two or more oxazoline units may be used. In addition, in a case of using a polymerizable monomer such as isopropenyl oxazoline, it is possible to use a compound that is obtained by performing copolymerization with an acrylic monomer, for example, (meth)acrylic acid, (meth)acrylic acid alkyl ester, (meth)acrylic acid hydroxyalkyl, and the like.

The silane coupling agent allows amine and a functional group in a treatment liquid to selectively react with each other, thereby making a cross-linking site have siloxane coupling. Examples of the silane coupling agent include γ-glycidoxy propyl trimethoxy silane, γ-glycidoxy propyl triethoxy silane, β-(3,4-epoxy cyclohexyl) ethyl trimethoxy silane, γ-chloropropyl methoxy silane, vinyl trichlorosilane, γ-mercaptopropyl trimethoxy silane, γ-aminopropyl triethoxy silane, N-β (aminoethyl)- γ-aminopropyl trimethoxy silane, and γ-isocyanatopropyl triethoxy silane.

Particularly, β-(3,4-epoxy cyclohexyl) ethyl trimethoxy silane, γ-aminopropyl triethoxy silane, and γ-isocyanatopropyl triethoxy silane are preferable in consideration of reactivity with the anionic polymer (x1).

The cross-linking agent (x2) may be used alone or in combination of two or more kinds thereof. For example, a compound having any functional group among an isocyanate group, a glycidyl group, a carboxyl group, and oxazoline group, and the silane coupling agent may be used in combination.

A blending amount of the cross-linking agent (x2) is not particularly limited in a range capable of obtaining a desired effect. However, it is preferable that the blending amount be 1 part by mass to 50 parts by mass with respect to 100 parts by mass of the anionic polymer (x1), and more preferably 5 parts by mass to 30 parts by mass. When the blending amount of the cross-linking agent (x2) is less than the lower limit (1 part by mass), a cross-linking structure becomes insufficient, and thus there is a concern that the effect of improving the water resistance cannot be sufficiently obtained. On the other hand, when the blending amount is more than the upper limit (50 parts by mass), there is a concern that a pot life of a coating liquid containing the component (X) may decrease.

As described above, the anionic polymer (x1) is a very effective material in consideration of trapping ion contamination. In addition, when the cross-linking agent (x2) is blended, the water resistance is improved.

Accordingly, when the corrosion-resistant protective layer 22 includes at least one layer of the layers (X) and (M) which contain the component (X), the electrolytic solution resistance or the hydrofluoric acid resistance is improved.

However, the component (X) alone does not have a function of protecting the metal terminal from corrosion. When forming a multi-layer structure in which the layer (A) that contains the component (A) is laminated on the layer that contains the component (X), or when forming the layer (M) that contains the component (A) in combination with the component (X), the effect of preventing corrosion in the metal terminal 21 is obtained.

### [Component (Y)]

The component (Y) is composed of a cationic polymer (y1) and a cross-linking agent (y2) that cross-links the cationic polymer (y1).

According to the investigation made by the present inventors, the cationic polymer (y1) is a compound that is particularly excellent in electrolytic solution resistance or the hydrofluoric acid resistance. As a main cause of the improvement, the following operations and the like may be considered. Specifically, fluorine ions are trapped (anion catcher) with a cation group and thus corrosion of the metal terminal is suppressed. A layer that is formed by only the above-described rare-earth element oxide sol is an aggregate of inorganic particles, and thus the layer is hard and brittle. However, when the cationic polymer (y1) form a composite (a laminated composite or a composite in the same layer), and thus the cohesive force increases.

As described above, the cationic polymer (y1) is a very effective material in consideration of the trapping of hydrofluoric acid, and when the layer that contains the cationic polymer (y1) is combined with the the above-described layer (A) or (M), or when the cationic polymer (y1) is contained in the layer (M), it is possible to expect further improvement in functionality.

However, similar to the case of the anionic polymer (x1), since the cationic polymer (y1) is a water-based polymer, when being used alone, the water resistance becomes inferior. When the cross-linking agent (y2) is blended in cationic polymer (y1), the water resistance increases. As a result, the electrolytic solution resistance or the hydrofluoric acid resistance is further improved.

### (Cationic Polymer (y1))

The cationic polymer (y1) is a polymer having a cationic group, and examples of the cationic group include an amino group, an imine group, and the like. As the cationic polymer (y1), particularly, a polymer having the amino group or the imine group is preferable.

Examples of preferred cationic polymer (y1) include polyethyleneimine, an ionic polymer complex composed of polyethyleneimine and a polymer having carboxylic acid, a first-grade primary amine graft acrylic resin in which primary amine is grafted in acryl main skeleton, polyallylamine, derivatives of polyallylamine, aminophenol, and the like.

Examples of the polymer having carboxylic acid that forms the ionic polymer complex with polyethylene imine include polycarboxylic acid (polycarboxylate) such as polyacrylic acid and an ionic salt thereof, a copolymer in which a comonomer is introduced into polycarboxylic acid (polycarboxylate), and polysaccharide having a carboxyl group such as carboxymethyl cellulose and an ionic salt thereof.

As the polyallylamine, homopolymers or copolymers of allylamine, allyl amine amide sulfate, diallyl amine, dimethylallylamine, and the like may be used. These amines may be free amines or amines that are stabilized with acetic acid or hydrochloric acid. In addition, as a copolymer component, maleic acid, sulfur dioxide, and the like may be used. In addition, a type in which thermal cross-linking properties are given by partial methoxyation of primary amine may be used.

In a case of the aminophenol, a type in which thermal cross-linking properties are given by partial methoxyation of primary amine may be used.

These cationic polymers may be used alone or in combination of two or more kinds.

Among the above-described cationic polymers, polyallylamine or a derivative thereof is preferable.

### (Cross-Linking Agent (y2))

The cross-linking agent (y2) that allows the cationic polymer to have a cross-linking structure may be a cross-linking agent that reacts with a cross-linking reactive group (for example, a cationic group such as an amino group and an imino group) of the cationic polymer to form cross-linking, and the cross-linking agent may be appropriately selected among known cross-linking agents.

Preferred examples of the cross-linking agent (y2) include at least one kind selected from the group consisting of compounds having any functional group among an isocyanate group, a glycidyl group, a carboxyl group, and an oxazoline group, and a silane coupling agent in consideration of reactivity.

Specific examples of the compounds and the silane coupling agent include the same compounds and silane coupling agent which are exemplified in the description of the cross-linking agent (x2).

The cross-linking agent (y2) may be used alone or in combination of two or more kinds thereof. For example, a compound having any functional group among an isocyanate group, a glycidyl group, a carboxyl group, and oxazoline group, and the silane coupling agent may be used in combination.

A blending amount of the cross-linking agent (y2) is not particularly limited in a range capable of obtaining a desired effect. However, it is preferable that the blending amount be 1 part by mass to 50 parts by mass with respect to 100 parts by mass of the cationic polymer (y1), and more preferably 5 parts by mass to 30 parts by mass. When the blending amount of the cross-linking agent (y2) is less than the lower limit (1 part by mass), a cross-linking structure becomes insufficient, and thus there is a concern that the effect of improving the water resistance cannot be sufficiently obtained. On the other hand, when the blending amount is more than the upper limit (50 parts by mass), there is a concern that a pot life of a coating liquid containing the component (Y) may decrease.

In addition, in a case where the cationic polymer (y1) is a derivative of polyallylamine in which primary amine of polyallylamine is subjected to methoxycarbonylation, thermal cross-linking properties are provided. Accordingly, even when the cross-linking agent (y2) is not blended, the derivative is regarded as substantially the same as the component (Y) to which the cross-linking agent (y2) is blended.

In addition, as a method of cross-linking the anionic polymer (x1) or the cationic polymer (y1), in addition to using of the above-described cross-linking agent, a method of forming a cross-linking structure such as ionic cross-linking by using a titanium or zirconium compound as a cross-linking agent may be used.

As described above, the cationic polymer (y1) is a very effective material in consideration of trapping of hydrofluoric acid. In addition, when the cross-linking agent (y2) is blended, the water resistance is improved. Accordingly, when the corrosion-resistant protective layer 22 includes at least one layer of the layers (Y) and (M) which contain the component (Y), the electrolytic solution resistance or the hydrofluoric acid resistance is improved.

However, the component (Y) alone does not have a function of protecting the metal terminal from corrosion. When obtaining a multi-layer structure in which the layer (A) that contains the component (A) is laminated on the layer that contains the component (Y), or when forming the layer (M) that contains the component (A) in combination with the component (Y), the effect of preventing corrosion in the metal terminal 21 is obtained.

### Examples

Hereinafter, the invention will be described in detail with reference to examples. However, the invention is not limited to the examples.

In the following respective examples, materials that were used to form the corrosion-resistant protective layer and film formation conditions during formation of a layer by using the respective materials are as follows. In addition, the blending amount of respective components represents an amount as a solid-content.

### (Used Materials)

### <Layer (A) Having Rare-Earth Element Oxide and the like>

A-1: "Sodium polyphosphate-stabilized cerium oxide sol" in which 10 parts by mass of Na salt of phosphoric acid was blended with respect to 100 parts by mass of cerium oxide, and a solid-content concentration was adjusted to 10% by mass by using distilled water as a solvent. (Film formation conditions) Drying was performed at 210°C for 30 seconds to form a layer (A-1).
A-2 (comparative product): "Acetic acid-stabilized cerium oxide sol" in which 10 parts by mass of acetic acid was blended with respect to 100 parts by mass of cerium oxide, and a solid-content concentration was adjusted to 10% by mass by using distilled water as a solvent. (Film formation conditions) Drying was performed at 210°C for 30 seconds to form a layer (A-2).

### <Layer (X) Having Anionic Polymer and the like>

X-1: Composition in which a composition composed of 90% by mass of "ammonium polyacrylate" and 10% by mass of "acryl-isoprophenyl oxazoline copolymer" was adjusted to have a solid-content concentration of 5% by mass by using distilled water as a solvent. (Film formation conditions) Drying was performed at 150°C for 30 seconds to form a layer (X-1).

### <Layer (Y) Having Cationic Polymer and the like>

Y-1: Composition in which a composition obtained by blending 5 parts by mass of "aminopropyl trimethoxy silane" with respect to 100 parts by mass of a mixture composed of 90% by mass of "polyallylamine" and 10% by mass of "epichlorohydrin additive of 1,6-hexanediol" was adjusted to have a solid-content concentration of 5% by mass by using distilled water as a solvent. (Film formation conditions) Drying was performed at 150°C for 30 seconds to form a layer (Y-1).

### <Layer (M) Having Rare-Earth Element Oxide, Anionic Polymer, Cationic Polymer, and the like>

M-1: Composition that was obtained by mixing A-1 and X-1 such that a mass a' of the solid-content of A-1 corresponded to 80 mg, and a mass x' of the solid-content of X-2 corresponded to 20 mg. (Film formation conditions) Drying was performed at 210°C for 30 seconds to form a layer (M-1).
M-2: Composition that was obtained by mixing A-1 and Y-1 such that the mass a' of the solid-content of A-1 corresponded to 80 mg, and a mass y' of the solid-content of Y-1 corresponded to 20 mg. (Film formation conditions) Drying was performed at 210°C for 30 seconds to form a layer (M-2).

### <Example 1>

An electrode terminal having a configuration shown in FIG. 1 was prepared in the following sequence.

A metal terminal was coated with A-1 by a gravure coating method to form a film, and this film was coated with X-1 by the gravure coating method to form a film, thereby forming a two-layer structured corrosion-resistant protective layer. As the metal terminal, an aluminum sheet (1N30-O material) having a width of 4 mm, a length of 30 mm, and a thickness of 100 µm was used. A coating amount of each of A-1 and X-1 was set in order for a mass (film mass) per unit area after film formation to be an amount corresponding to a value shown in Table 2. A value of (m_{X}+m_{Y})/m_{A} in the corrosion-resistant protective layer was 0.38.

Next, the metal terminal on which the corrosion-resistant protective layer was formed was interposed between a pair of resin films. These were disposed between heat seal bars, and thermal fusion between the metal terminal on which the corrosion-resistant protective layer was formed and the resin films was performed under pressure, thereby preparing an electrode terminal. As the resin films, a single-layer film (having a width of 7 mm, a length of 8 mm, and a thickness of 80 µm) of acidic polyolefin resin that was obtained by graft-modifying a polyolefin resin with maleic anhydride was used. As thermal fusion conditions under pressure, a gap between the heat seal bars was set to 210 µm, a temperature was 170°C, and a driving force of the heat seal bars was set to 400 N.

### <Example 2>

An electrode terminal was prepared in the same manner as Example 1 except that a film mass of a first layer in the corrosion-resistant protective layer was changed. The value of (m_{X}+m_{Y})/m_{A} in the corrosion-resistant protective layer was 0.2.

### <Example 3>

An electrode terminal was prepared in the same manner as Example 1 except that a second layer of the corrosion-resistant protective layer was formed by using Y-1 instead of X-1 to have a film mass shown in Table 1. The value of (m_{X}+m_{Y})/m_{A} in the corrosion-resistant protective layer was 1.25.

### <Example 4>

An electrode terminal was prepared in the same manner as Example 1 except that the second layer was further coated with Y-1 by the gravure coating method to form a film, thereby forming a three-layer structured corrosion-resistant protective layer. A coating amount of Y-1 was set in order for a mass (film mass) per unit area after film formation to be an amount corresponding to a value shown in Table 2. The value of (m_{X}+m_{Y})/m_{A} in the corrosion-resistant protective layer was 0.75.

### <Example 5>

An electrode terminal was prepared in the same manner as Example 1 except that the first layer was formed by using M-1 instead of A-1, and the second layer was not formed. A coating amount of M-1 was set in order for a mass (film mass) per unit area after film formation to be an amount corresponding to a value shown in Table 2. The value of (m_{X}+m_{Y})/m_{A} in the corrosion-resistant protective layer was 0.25.

### <Example 6>

An electrode terminal was prepared in the same manner as Example 5 except that the first layer was further coated with Y-1 by the gravure coating method to form a film, thereby forming a two-layer structured corrosion-resistant protective layer. A coating amount of Y-1 was set in order for a mass (film mass) per unit area after film formation to be an amount corresponding to a value shown in Table 2. The value of (m_{X}+m_{Y})/m_{A} in the corrosion-resistant protective layer was 0.5.

### <Example 7>

An electrode terminal was prepared in the same manner as Example 5 except that the first layer of the corrosion-resistant protective layer was formed by using M-2 instead of M-1, and the second layer was formed by using X-1 instead of Y-1 to have a film mass shown in Table 2. The value of (m_{X}+m_{Y})/m_{A} in the corrosion-resistant protective layer was 1.5.

### <Comparative Example 1>

An electrode terminal was prepared in the same manner as Example 1 except that the second layer was not formed. The value of (m_{X}+m_{Y})/m_{A} in the corrosion-resistant protective layer was zero.

### <Comparative Example 2>

An electrode terminal was prepared in the same manner as Example 1 except that the first layer was formed by using X-1 instead of A-1, and the second layer was not formed. A coating amount of X-1 was set in order for a mass (film mass) per unit area after film formation to be an amount corresponding to a value shown in Table 2. With regard to the value of (m_{X}+m_{Y})/m_{A} in the corrosion-resistant protective layer, since mA was zero, measurement was impossible (infinite).

### <Comparative Example 3>

An electrode terminal was prepared in the same manner as Comparative Example 2 except that the first layer was further coated with Y-1 by the gravure coating method to form a film, thereby forming a two-layer structured corrosion-resistant protective layer. A coating amount of Y-1 was set in order for a mass (film mass) per unit area after film formation to be an amount corresponding to a value shown in Table 2. With regard to the value of (m_{X}+m_{Y})/m_{A} in the corrosion-resistant protective layer, since mA was zero, measurement was impossible (infinite).

### <Comparative Example 4>

An electrode terminal was prepared in the same manner as Example 1 except that the first layer was formed using A-2 instead of A-1. The value of (m_{X}+m_{Y})/m_{A} in the corrosion-resistant protective layer was 0.375.

However, as the value of m_{A}, a total amount of cerium oxide and acetic acid was used.

### <Evaluation>

With respect to the electrode terminals obtained in Examples 1 to 7, and Comparative Examples 1 to 4, two kinds of evaluation of the electrolytic solution resistance and heat seal strength (peeling strength during thermal fusion under pressure) were performed. Details thereof are shown below.

### (Evaluation 1: Evaluation of Electrolytic Solution Resistance)

An electrolytic solution for test was prepared by adding water in a LiPF6 solution (concentration of LiPF6 was 1.5 M) in which a mixed solvent of ethylene carbonate/diethyl carbonate/dimethyl carbonate = 1:1:1 (mass ratio) to be 1500 ppm was set as a solvent.

The electrolytic solution for test was filled in a Teflon (registered trademark) vessel having an inner capacity of 250 mL. Each of the obtained electrode terminals was put in the vessel. Then, the vessel was hermetically sealed and was kept at 85°C for one day, one week, two weeks, and four weeks, respectively. With respect to the electrode terminals after keeping, a peeling situation of the sealant from the metal terminal was evaluated on the basis of the following criteria. Results thereof are shown in Table 2.
E: Without delamination. A sample was fractured, and thus difficult to peel. Therefore, measurement of peeling strength was impossible.
G: Without delamination. The measurement of the peeling strength was possible to some extent.
P: Floating of the sealant due to delamination was confirmed.

### (Evaluation 2: Evaluation of Heat Seal Strength)

Each of the electrode terminals that were prepared as described above was interposed in a packaging material for lithium ion batteries, and heat-sealing was performed.

Then, a portion (including the corrosion-resistant protective layer) of the metal terminal other than a sealant portion was cut by a width of 15 mm, thereby obtaining a sample. This sample was not immersed in an electrolytic solution, and the peeling strength between the packaging material and the metal terminal was measured.

As the packaging material for lithium ion batteries, a packaging material for lithium ion batteries with the same configuration as the multi-layer sheet 30 shown in FIG. 3 was used. As the polyolefin-based resin layer (sealant layer) 31, polypropylene (thickness: 50 µm) was used. As the inner-layer side adhesive layer 32, maleic acid-modified polypropylene (thickness: 25 µm) was used. As the metal foil layer 34, aluminum (thickness: 40 µm) was used. As the corrosion-resistant protective layer 33, the corrosion-resistant protective layer of Example 5 of the invention was used. As the outer-layer side adhesive layer 35, a polyurethane-based adhesive (thickness: 4 µm) was used. As the outer layer 36, nylon (thickness: 25 µm) was used. With regard to heat seal conditions, a temperature was set to 190°C, a time was set to 3 seconds, and a driving force was set to 400 N. The measurement of the peeling strength was performed at 300 mm/second by using tensilion.

Results of the peeling test were evaluated on the basis of the following criteria. Results thereof are shown in Table 2.
G: 40 N or more in terms of 15 mm width
P: Less than 40 N in terms of 15 mm width

**[Table 2]**

| | Corrosion-resistant protective layer | | | Evaluation 1 | | | | Evaluation 2 |
|---|---|---|---|---|---|---|---|---|
| | First layer (film mass) | Second layer (film mass) | Third layer (film mass) | One day | One week | Two weeks | Four weeks | |
| Example 1 | A-1 (80 mg/m²) | X-1 (30 mg/m²) | - | E | E | E | E | G |
| Example 2 | A-1 (150 mg/m²) | X-1 (30 mg/m²) | - | E | E | E | E | G |
| Example 3 | A-1 (80 mg/m²) | Y-1 (100 mg/m²) | - | E | E | E | E | G |
| Example 4 | A-1 (80 mg/m²) | X-1 (30 mg/m²) | Y-1 (30 mg/m²) | E | E | E | E | G |
| Example 5 | M-1 (100 mg/m²) | - | - | E | E | E | E | G |
| Example 6 | M-1 (100 mg/m²) | Y-1 (30 mg/m²) | - | E | E | E | E | G |
| Example 7 | M-2 (100 mg/m²) | X-1 (100 mg/m²) | - | E | E | E | E | G |
| Comparative Example 1 | A-1 (80 mg/m²) | - | - | G | P | P | P | P |
| Comparative Example 2 | X-1 (30 mg/m²) | - | - | P | P | P | P | G |
| Comparative Example 3 | X-1 (30 mg/m²) | Y-1 (30 mg/m²) | - | P | P | P | P | G |
| Comparative Example 4 | A-2 (80 mg/m²) | X-1 (30 mg/m²) | - | P | P | P | P | G |

### (Discussion of Results of Evaluation 1)

Even when all of the electrode terminals of Examples 1 to 7 were immersed in the electrolytic solution for test for four weeks, a state in which the sealant was not likely to be peeled from the metal terminal was maintained, and thus results were very satisfactory. This is considered to be because corrosion in the metal terminals due to hydrofluoric acid generated due to the presence of water in the electrolytic solution for test was sufficiently suppressed by the corrosion-resistant protective layer. On the other hand, in Comparative Example 1, a decrease in the peel strength was confirmed in the electrolytic solution immersion test for one day, and floating of a resin portion was confirmed after one week. In addition, in Comparative Examples 2 to 4, floating of the resin portion was confirmed in the electrolytic solution immersion test for one day.

From these results, it was confirmed that the corrosion-resistant protective layer in Examples 1 to 7 of the invention increased corrosion resistance under a battery environment, and was very effective for improvement in the electrolytic solution resistance.

### (Discussion of Results of Evaluation 2)

In Examples 1 to 7, peeling strength of 40 N or more in terms of 15 mm width were obtained. On the other hand, in Comparative Example 1, the peeling strength was less than 40 N in terms of 15 mm width. In addition, a peeling site was an interface between the metal terminal and the sealant.

From these results, it was confirmed that when using the metal terminals provided with a corrosion-resistant protective layer according to Examples 1 to 7 of the invention, not only the electrolytic solution resistance and but also the adhesiveness at an interface between the metal terminal and the polyolefin-based resin layer increased.

## Claims

1. An electrode terminal for a secondary battery, the electrode terminal being interposed between polyolefin-based resin layers facing each other by thermal fusion under pressure at an outer edge portion of a packaging material, the packaging material comprising a multi-layer sheet including a polyolefin-based resin layer on which at least a metal layer is laminated, and the packaging material sealing at least a positive electrode, a negative electrode, and an electrolyte therein, the electrode terminal comprising:
a metal terminal that is connected to at least one of the positive electrode and the negative electrode; and
a corrosion-resistant protective layer that is formed on a surface of the metal terminal, wherein
the corrosion-resistant protective layer includes a layer (A) that contains the following component (A), and any one or both of a layer (X) that contains the following component (X) and a layer (Y) that contains the following component (Y):
Component (A): Component composed of a rare-earth element oxide (a1) and phosphoric acid or phosphate (a2) which is blended in an amount of 1 part by mass to 100 parts by mass with respect to 100 parts by mass of the rare-earth element oxide (a1);
Component (X): Component composed of an anionic polymer (x1) and a cross-linking agent (x2) that cross-links the anionic polymer (x1);
Component (Y): Component composed of a cationic polymer (y1) and a cross-linking agent (y2) that cross-links the cationic polymer (y1).

2. An electrode terminal for a secondary battery, the electrode terminal being interposed between polyolefin-based resin layers facing each other by thermal fusion under pressure at an outer edge portion of a packaging material, the packaging material comprising a multi-layer sheet including a polyolefin-based resin layer on which at least a metal layer is laminated, and the packaging material sealing at least a positive electrode, a negative electrode, and an electrolyte therein, the electrode terminal comprising:
a metal terminal that is connected to at least one of the positive electrode and the negative electrode; and
a corrosion-resistant protective layer that is formed on a surface of the metal terminal, wherein
the corrosion-resistant protective layer includes a layer (M) that contains the following component (A), and any one or both of the following component (X) and the following component (Y):
Component (A): Component composed of a rare-earth element oxide (a1) and phosphoric acid or phosphate (a2) which is blended in an amount of 1 part by mass to 100 parts by mass with respect to 100 parts by mass of the rare-earth element oxide (a1);
Component (X): Component composed of an anionic polymer (x1) and a cross-linking agent (x2) that cross-links the anionic polymer (x1);
Component (Y): Component composed of a cationic polymer (y1) and a cross-linking agent (y2) that cross-links the cationic polymer (y1).

3. An electrode terminal for a secondary battery, the electrode terminal being interposed between polyolefin-based resin layers facing each other by thermal fusion under pressure at an outer edge portion of a packaging material, the packaging material comprising a multi-layer sheet including a polyolefin-based resin layer on which at least a metal layer is laminated, and the packaging material sealing at least a positive electrode, a negative electrode, and an electrolyte therein, the electrode terminal comprising:
a metal terminal that is connected to at least one of the positive electrode and the negative electrode; and
a corrosion-resistant protective layer that is formed on a surface of the metal terminal, wherein
the corrosion-resistant protective layer includes a layer (M) that contains the following component (A) and any one or both of the following component (X) and the following component (Y), and any one or both of a layer (X) that contains the following component (X) and a layer (Y) that contains the following component (Y):
Component (A): Component composed of a rare-earth element oxide (a1) and phosphoric acid or phosphate (a2) which is blended in an amount of 1 part by mass to 100 parts by mass with respect to 100 parts by mass of the rare-earth element oxide (a1);
Component (X): Component composed of an anionic polymer (x1) and a cross-linking agent (x2) that cross-links the anionic polymer (x1);
Component (Y): Component composed of a cationic polymer (y1) and a cross-linking agent (y2) that cross-links the cationic polymer (y1).

4. The electrode terminal for secondary batteries according to any one of Claims 1 to 3, wherein
in the corrosion-resistant protective layer, a mass mA of the component (A) per unit area is 0.010 g/m² to 0.200 g/m².

5. The electrode terminal for secondary batteries according to any one of Claims 1 to 4,
wherein in the corrosion-resistant protective layer, a mass m_{A} (g/m²) of the component (A) per unit area, a mass m_{X} (g/m²) of the component (X) per unit area, and a mass m_{Y} (g/m²) of the component (Y) per unit area satisfy a relationship of Expression: 2≥(m_{X}+m_{Y})/m_{A}.

6. The electrode terminal for secondary batteries according to any one of Claims 1 to 5, wherein
the layer (A) or the layer (M) is directly laminated on the metal terminal.

7. The electrode terminal for secondary batteries according to any one of Claims 1 to 6, wherein
the anionic polymer (x1) is at least one kind selected from the group consisting of copolymers that contain poly(meth)acrylic acid, poly(meth)acrylate, (meth)acrylic acid, and (meth)acrylate as a main component.

8. The electrode terminal for secondary batteries according to any one of Claims 1 to 7, wherein
the cationic polymer (y1) is at least one kind selected from the group consisting of polyethyleneimine, an ionic polymer complex composed of polyethyleneimine and a polymer having carboxylic acid, a primary amine graft acrylic resin in which primary amine is grafted in acryl main skeleton, polyallylamine, derivatives of polyallylamine, and aminophenol.

9. The electrode terminal for secondary batteries according to any one of Claims 1 to 8, wherein
each of the cross-linking agents (x2) and (y2) is at least one kind selected from the group consisting of a compound having any functional group among an isocyanate group, a glycidyl group, a carboxyl group, and an oxazoline group, and a silane coupling agent.

10. The electrode terminal for secondary batteries according to any one of Claims 1 to 9, wherein
the rare-earth element oxide (a1) is cerium oxide.

11. The electrode terminal for secondary batteries according to any one of Claims 1 to 10, wherein
the phosphoric acid or phosphate (a2) is condensed phosphoric acid or condensed phosphate.

12. The electrode terminal for secondary batteries according to any one of Claims 1 to 11, wherein
a sealant is further provided on the corrosion-resistant protective layer.

13. The electrode terminal for secondary batteries according to any one of Claims 1 to 3, wherein
in the packaging material, outer edge portions of a pair of the multi-layer sheets, in which the polyolefin-based resin layers are disposed to face each other, are thermally fused under pressure.

14. The electrode terminal for secondary batteries according to any one of Claims 1 to 3, wherein
in the packaging material, respective outer edge portions of the multi-layer sheet, which is folded back such that respective portions of the polyolefin-based resin layer face each other, are thermally fused under pressure.
